# EUROPÄISCHE PATENTSCHRIFT

(11) **EP 0 854 264 B1**
(45) Veröffentlichungstag und Bekanntmachung des Hinweises auf die Patenterteilung: **22.12.1999**
(21) Anmeldenummer: 98100249.6
(22) Anmeldetag: 09.01.1998
(51) Int. Cl.: E06B 3/66, C03C 17/36

(54) **Isolierglasscheibe mit niedrigem k-Wert**
Insulating glass pane with low thermal conductivity
Panneau de verre isolant avec conductivité thermique réduite

(30) Priorität: 15.01.1997 DE 19701135
(43) Veröffentlichungstag der Anmeldung: 22.07.1998
(73) Patentinhaber: SAINT-GOBAIN VITRAGE, 92400 Courbevoie (FR)
(72) Erfinder: Gläser, Hans J., Prof. Dr., 51643 Gummersbach (DE); Gelderie, Udo, 52080 Aachen (DE)
(74) Vertreter: Biermann, Wilhelm, Dr.-Ing. (Pat-Ass.)

(56) Entgegenhaltungen:
- EP-A- 0 024 466
- DE-A- 3 215 665
- US-A- 3 935 351

## Beschreibung

Die Erfindung betrifft eine Isolierglasscheibe mit niedrigem k-Wert, aus wenigstens zwei über einen Abstandshalterahmen durch einen luft- oder gasgefüllten Zwischenraum voneinander getrennten Glasscheiben, von denen wenigstens eine Glasscheibe auf der zum Zwischenraum gerichteten Seite mit einer wärmestrahlenreflektierenden Schicht, und eine Glasscheibe auf ihrer äußeren Oberfläche mit einer niedrigemittierenden Schicht auf Basis eines Metalls, eines Metalloxids oder eines Halbleiters versehen ist. Eine solche Isolierglasscheibe ist beispielsweise durch EP-A-0 024 466 bekannt.

Isolierglasscheiben mit niedrigem k-Wert, das heißt mit niedrigem Wärmedurchgangskoeffizienten, werden in zunehmendem Umfang eingesetzt, um den Heizenergieverbrauch zu reduzieren. Bei Isolierglasscheiben mit besonders niedrigem k-Wert kann jedoch schon bei niedriger relativer Luftfeuchtigkeit die Außenseite beschlagen. Die Kondensation von Feuchtigkeit auf der Außenoberfläche wird insbesondere bei Schrägverglasungen beobachtet, beispielsweise bei Dachfenstern, und tritt in besonders starkem Maße auf bei klarem Himmel ohne direkte Sonneneinstrahlung, Windstille und Außentemperaturen wenig über dem Gefrierpunkt. Durch den Feuchtigkeitsbelag auf der Außenseite der Isolierglasscheibe werden die Transparenz der Verglasung und ihre Isolierwirkung beeinträchtigt.

Die vorstehend beschriebene Kondensation wird durch eine Absenkung der Temperatur der äußeren Glasscheibe unter die Außentemperatur infolge Wärmeabstrahlung an den Himmel verursacht.

Die Kondensation auf der Außenseite einer Isolierglasscheibe kann dadurch verringert werden, daß die Außenoberfläche mit einer niedrigemittierenden Schicht versehen wird. Wenn zum Beispiel das Emissionsvermögen der äußeren Glasscheibe durch eine niedrigemittierende Beschichtung von 0,84 auf 0,15 gesenkt wird, kann bei Isolierverglasungen bis herab zu einem k-Wert von 0,7 W/m²K bei allen Einbaulagen eine Kondensation auf der Außenoberfläche vollständig vermieden werden. Ein Emissionsvermögen von 0,15 läßt sich beispielsweise durch pyrolytisch aufgebrachte fluordotierte Zinnoxidschichten erreichen, die eine gute Witterungsbeständigkeit aufweisen und außerdem mechanisch hinreichend beständig sind.

Isolierglasscheiben mit niedrigem k-Wert und einer niedrigemittierenden Oberflächenschicht auf ihrer Außenoberfläche sind bekannt. Solche Isolierglasscheiben verlieren jedoch zumindest teilweise die gewünschte Wirkung, wenn das Emissionsvermögen der Außenseite durch zusätzliche Schichten wieder erhöht wird. Das ist der Fall, wenn sich auf der Außenseite der Isolierglasscheibe ein Wasserfilm beispielsweise infolge Regen bildet, oder wenn sich auf der Außenseite Staub und/oder Schmutz ablagem. Diese Gefahr der Beeinträchtigung der Wirkung der niedrigemittierenden Schicht ist besonders groß bei schrägem Einbau der Verglasung und wird mit zunehmender Neigung aus der Senkrechten größer.

Der Erfindung liegt die Aufgabe zugrunde, eine Isolierglasscheibe mit niedrigem k-Wert und niedrigemittierender Außenoberfläche bereitzustellen, bei der die Gefahr einer Zunahme der Kondensationsneigung auf der Außenseite verringert ist.

Gemäß der Erfindung wird diese Aufgabe dadurch gelöst, daß auf der niedrigemittierenden Schicht auf der Außenseite der Isolierglasscheibe eine chemisch und mechanisch beständige transparente hydrophobe Schicht angeordnet ist.

Vorzugsweise finden hierfür hydrophobe Schichten Anwendung, die gleichzeitig schmutzabweisende Eigenschaften haben, das heißt auf denen Schmutz, Staub oder Eintrocknungsrückstände nicht haften, sondern leicht entfernbar sind.

Hydrophobe Schichten verleihen der Isolierglasscheibe die Eigenschaft, daß sich auf der Glasoberfläche kein zusammenhängender Wasserfilm bildet. Das Wasser, gleichgültig ob es durch Regen oder bei der Reinigung aufgebracht wird, läuft vielmehr unmittelbar nach dem Kontakt mit der Glasoberfläche von dieser ab. Dabei nimmt das ablaufende Wasser die Schmutz- und Staubpartikel, die sich vorher auf der Glasoberfläche abgelagert hatten, mit. Die hydrophoben Schichten üben also eine gewisse selbstreinigende Wirkung auf die niedrigemittierende Schicht aus, so daß deren niedrigemittierende Eigenschaften in hohem Maße erhalten bleiben.

Als hydrophobe Schichten kommen grundsätzlich alle bekannten Schichten infrage, soweit sie einerseits die erforderlichen Eigenschaften wie hohe Transmission im sichtbaren und im infraroten Spektralbereich und Farbneutralität in der Durchsicht und in der Reflexion, und andererseits die erforderliche chemische und mechanische Beständigkeit aufweisen.

Besonders vorteilhaft in Bezug auf die Dauerhaftigkeit sind sogenannte funktionelle Silane, das heißt chemische Verbindungen, die außer dem hydrophobierenden Bestandteil im Molekül eine sogenannte siliciumfunktionelle Gruppe enthalten, die eine starke chemische Bindung des Moleküls zu der niedrigemittierenden Schicht bewirkt. Als hydrophobierend wirkende Gruppe kann das Molekül einer solchen Verbindung fluorierte oder perfluorierte Kohlenwasserstoffketten, oder stattdessen auch reine Kohlenwasserstoffketten oder silikonhaltige Gruppen enthalten. Die siliciumfunktionelle Gruppe des Moleküls kann eine oder mehrere Alkoxygruppen enthalten. Sie kann auch mit Chlor verbunden sein, das auf der niedrigemittierenden Schicht hydrolysiert und sich dann chemisch mit dieser verbindet. Hydrophobierungsmittel dieser Art sind grundsätzlich bekannt. Geeignete Verbindungen lassen sich durch Versuche auswählen.

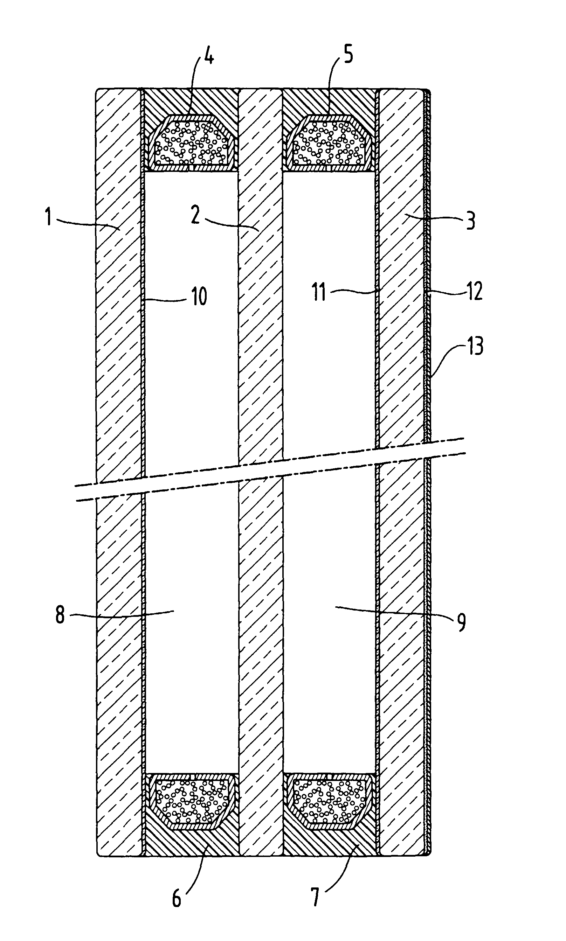

Ein Ausführungsbeispiel für eine erfindungsgemäße Isolierglasscheibe wird nachfolgend anhand der Zeichnung näher beschrieben.

Die Zeichnung zeigt eine erfindungsgemäß ausgebildete Dreifach-lsolierglasscheibe mit einem extrem niedrigen k-Wert von 0,7 W/m²K in einer Schnittdarstellung.

Die Isolierglasscheibe umfaßt drei jeweils 4 mm dicke Floatglasscheiben 1, 2 und 3, die über Abstandshalterahmen 4, 5 mit Hilfe von Klebedichtmassen 6, 7 miteinander verbunden sind. Die zwischen den Glasscheiben gebildeten Zwischenräume 8 und 9 sind zur Erhöhung der Wärmedämmung mit einem wärmedämmenden Gas wie z. B. Krypton gefüllt. Die Glasscheibe 1 ist auf der dem Gaszwischenraum 8 zugewandten Seite mit einer wärmestrahlenreflektierenden Schicht 10 versehen, und ebenso ist die Glasscheibe 3 auf der dem Gaszwischenraum 9 zugewandten Seite mit einer wärmestrahlenreflektierenden Schicht 11 versehen. Bei den wärmestrahlenreflektierenden Schichten 10 und 11 handelt es sich vorzugsweise um Mehrfachschichten mit Funktionsschichten aus Silber. Diese wärmestrahlenreflektierenden Mehrfachschichten haben beispielsweise den Aufbau Glas - 30 nm SnO₂-2 nm NiCr- 10 nm Ag - 3 nm NiCr- 30 nm SnO₂. Isolierglasscheiben mit dem bisher beschriebenen Aufbau sind bekannt. Sie weisen einen extrem niedrigen k-Wert von 0,7 W/m²K auf.

Bei der dargestellten Isolierglasscheibe ist die Glasscheibe 3 als Außenscheibe vorgesehen, die zur Außenatmosphäre gerichtet ist. Auf ihrer Außenoberfläche ist sie mit einer niedrigemittierenden Schicht 12 aus fluordotiertem Zinnoxid versehen. Zum Bilden dieser Schicht 12 wird vorzugsweise eine fluorhaltige metallorganische Zusammensetzung auf die Glasoberfläche aufgebracht, die durch Pyrolyse bei hohen Temperaturen in eine Oxidschicht mit hoher mechanischer und chemischer Beständigkeit umgewandelt wird. Die Dicke dieser niedrigemittierenden SnO2-Schicht beträgt etwa 320 nm, und die Schicht hat einen Flächenwiderstand von etwa 15 Ohm pro Quadrateinheit. Durch diese niedrigemittierende Schicht 12 wird die Emissivität der Glasscheibe 3 auf dieser Seite von 0,84 auf 0,15 gesenkt.

Auf dieser niedrigemittierenden Schicht 12 ist eine hydrophobe Schicht 13 aus einer siliciumorganischen Zusammensetzung angeordnet. Diese hydrophobe Schicht 13 wird beispielsweise dadurch hergestellt, daß eine Lösung aus Tetraethoxysilan, Fluoroalkylsilan und Äthanol auf die niedrigemittierende Schicht mit Hilfe eines geeigneten Auftragsverfahrens aufgebracht und bei erhöhten Temperaturen von beispielsweise 350 °C eingebrannt wird. Im Endzustand beträgt die Dicke dieser hydrophoben Schicht vorzugsweise 30 bis 40 nm.

Das Emissionsvermögen der Schicht 12 wird durch die Schicht 13 nicht oder nur unwesentlich erhöht. Infolge der hohen chemischen und mechanischen Beständigkeit bleibt die hydrophobe Wirkung dieser Schicht langfristig erhalten.

Anstelle der niedrigemittierenden, mit Fluor dotierten Zinnoxidschicht können auch andere niedrigemittierende Schichten oder Schichtsysteme eingesetzt werden, wenn sie die notwendige chemische und mechanische Beständigkeit haben.

## Patentansprüche

1. Isolierglasscheibe mit niedrigem k-Wert, aus wenigstens zwei über einen Abstandshalterahmen (4, 5) durch einen luft- oder gasgefüllten Zwischenraum (8, 9) voneinander getrennten Glasscheiben (1, 2, 3), von denen wenigstens eine Glasscheibe (1) auf der zum Zwischenraum (8) gerichteten Seite mit einer wärmestrahlenreflektierenden Schicht (10), und eine Glasscheibe (3) auf ihrer äußeren Oberfläche mit einer niedrigemittierenden Schicht (12) auf Basis eines Metalls, eines Metalloxids oder eines Halbleiters versehen ist, **dadurch gekennzeichnet,** daß auf der niedrigemittierenden Schicht (12) auf der Außenseite der Isolierglasscheibe eine chemisch und mechanisch beständige transparente hydrophobe Schicht (13) angeordnet ist.

2. Isolierglasscheibe nach Anspruch 1, **dadurch gekennzeichnet,** daß die hydrophobe Schicht (13) aus einer chemischen Verbindung besteht, deren Molekül außer dem hydrophobierend wirkenden Bestandteil eine siliciumfunktionelle Gruppe aufweist.

3. Isolierglasscheibe nach Anspruch 2, dadurch gekennzeichnet, daß der hydrophobierend wirkende Bestandteil der hydrophoben Schicht (13) fluorierte oder perfluorierte Kohlenwasserstoffketten oder reine Kohlenwasserstoffketten oder silikonhaltige Gruppen enthält, und daß die siliciumfunktionellen Gruppen eine oder mehrere Alkoxygruppen oder eine oder mehrere Chlorgruppen enthalten.

4. Isolierglasscheibe nach einem der Ansprüche 1 bis 3, **dadurch gekennzeichnet,** daß
die wärmestrahlenreflektierenden Schichten (10,11) aus nach einem Vakuumverfahren aufgebrachten Mehrfachschichten mit Funktionsschichten aus Silber,
die niedrigemittierende Schicht (12) aus einer pyrolytisch aufgebrachten fluordotierten Zinnschicht und
die hydrophobe Schicht (13) aus einer Fluoralkylsilan enthaltenden Schicht bestehen.

## Claims

1. Insulating glass pane with low k value, consisting of at least two glass panes (1, 2, 3), which are separated from one another by way of a spacer frame (4, 5) by an air-filled or gas-filled intermediate space (8, 9) and of which at least one glass pane (1) is provided on the side oriented towards the intermediate space (8) with a coating (10) reflecting thermal radiation and one glass pane (3) is provided on its outer surface with a low-emission coating (12) based on a metal, a metal oxide or a semiconductor, characterised in that a chemically and mechanically resistant transparent hydrophobic coating (13) is arranged on the low-emission coating (12) on the outer side of the insulating glass pane.

2. Insulating glass pane according to claim 1, characterised in that the hydrophobic coating (13) consists of a chemical compound, the molecules of which have, apart from the hydrophobically-acting component, a silicon functional group.

3. Insulating glass pane according to claim 2, characterised in that the hydrophobically-acting component of the hydrophobic coating (13) contains fluoridised or perfluoridised hydrocarbon chains or pure hydrocarbon chains or groups containing silicon, and the silicon functional groups contain one or more alkoxy groups or one or more chloride groups.

4. Insulating glass pane according to one of claims 1 to 3, characterised in that the coatings (10, 11) reflecting thermal radiation consist of multiple layers, which are applied by a vacuum process, with functional layers of silver, the low-emission coating (12) consists of a pyrolytically applied fluoro-doped tin layer and the hydrophobic coating (13) consists of a layer containing fluoroalkylsilane.

## Revendications

1. Vitrage isolant présentant une faible valeur k, comportant au moins deux feuilles de verre (1, 2, 3) séparées les unes des autres par l'intermédiaire d'un cadre d'espacement (4, 5), par un espace intermédiaire (8, 9) rempli d'air ou de gaz, dont au moins une feuille de verre (1) est pourvue sur la face tournée vers l'espace intermédiaire (8) d'une couche réfléchissant des rayons thermiques (10) et une feuille de verre (3) est pourvue sur sa surface extérieure d'une couche visiblement émissive (12) formée d'un métal, d'un oxyde métallique ou d'un semiconducteur, caractérisé en ce qu'une couche hydrophobe transparente (13) résistant aux sollicitations chimique et mécanique est disposée sur la couche faiblement émissive (12) sur la face extérieure du vitrage isolant.

2. Vitrage isolant suivant la revendication 1, caractérisé en ce que la couche hydrophobe (13) consiste en une liaison chimique dont la molécule contient, outre le composant à effet hydrophobe, un groupement fonctionnel au silicium.

3. Vitrage isolant suivant la revendication 2, caractérisé en ce que le composant à effet hydrophobe de la couche hydrophobe (13) contient des chaînes hydrocarbonées fluorées ou perfluorées ou des chaînes hydrocarbonées pures ou des groupements à base de silicone et en ce que les groupements fonctionnels au silicium contiennent un ou plusieurs groupements alcoxy ou un ou plusieurs groupements chlorés.

4. Vitrage isolant suivant l'une des revendications 1 à 3, caractérisé en ce que les couches réfléchissant des rayons thermiques (10, 11) consistent en des couches multiples formées de couches fonctionnelles en argent et appliquées suivant le procédé sous vide, la couche faiblement émissive (12) consiste en une couche d'étain dopée au fluor et appliquée par pyrolyse et la couche hydrophobe (13) consiste en une couche contenant un fluoroalkoylsilane.
